# EUROPÄISCHE PATENTSCHRIFT

(11) **EP 0 856 424 B1**
(45) Veröffentlichungstag und Bekanntmachung des Hinweises auf die Patenterteilung: **09.04.2003**
(21) Anmeldenummer: 98101432.7
(22) Anmeldetag: 28.01.1998
(51) Int. Cl.: B60J 7/02, B60J 7/05

(54) **Fahrzeug-Schiebedach**
Sliding roof for vehicle
Toit coulissant pour véhicule

(30) Priorität: 01.02.1997 DE 19703818
(43) Veröffentlichungstag der Anmeldung: 05.08.1998
(73) Patentinhaber: Webasto Systemkomponenten GmbH, 82131 Stockdorf (DE)
(72) Erfinder: Jardin, Hans, 82266 Inning-Bachern (DE); Braunsberger, Oskar, 87719 Mindelheim (DE)
(74) Vertreter: Wiese, Gerhard

(56) Entgegenhaltungen:
- DE-A- 3 444 606
- FR-A- 2 645 803
- US-A- 4 566 730

## Beschreibung

Die Erfindung bezieht sich auf ein Schiebedach, insbesondere ein Schiebehebedach, für Fahrzeuge mit einem Deckel, der eine in einem festen Teil des Fahrzeugdachs ausgebildete Dachöffnung wahlweise verschließt oder wenigstens teilweise freigibt, und mit einer bewegbaren Wasserrinne, die in der Deckelschließstellung unterhalb der Hinterkanten von Deckel und Dachöffnung zu liegen kommt, über wenigstens einen Verbindungsarm mit Teilen des Deckels oder einem in Abstand von der Deckelhinterkante liegenden Deckelverstärkungsteil verbunden und in der Deckelschließstellung durch entsprechende Vorspannung der Verbindungsarme gegen die Unterseite des Deckels und des festen Fahrzeugdachteils angedrückt ist, wobei die Verbindungsarme als federnde Verbindungsarme ausgebildet und formschlüssig am Deckel (1) bzw. an dem Deckelverstärkungsteil gehalten sind.

Ein derartiges Schiebedach ist aus der FR-A-2 645 803 bekannt. Bei dieser ist ein federnder Verbindungsarm für eine bewegbare Wasserrinne als separates Bauteil ausgebildet und mittels eines Bolzens und einer Verrastung an einem deckelfesten Teil befestigt Die Befestigung an der Wasserrinne erfolgt mittels einer Verschraubung. Durch die Herstellung als Einzelteil und die Anbindung am Deckel und an der Wasserrinne ist ein hoher Herstellungs- und Montageaufwand erforderlich. Eine ähnliche Ausbildung mit am Deckel angelenkten steifen Verbindungsarmen, die die Wasserrinne jedoch starr tragen, ist aus der japanischen Gebrauchsmuster-Offenlegungsschrift JP-U-27724/86(JP-U-61-27724) bekannt, die ebenfalls ein Fahrzeug-Schiebedach betrifft.

Der Erfindung liegt die Aufgabe zugrunde, ein Schiebedach der eingangs genannten Art zu schaffen, das eine einfache Montage der Wasserrinne erlaubt und deren zuverlässige Funktion stets gewährleistet. Gelöst wird diese Aufgabe durch die kennzeichnenden Merkmale des Patentanspruchs 1. Vorteilhafte Weiterbildungen der Erfindung sind in den Unteransprüchen angegeben.

Demnach sieht die Erfindung vor, daß das Deckel-Verstärkungsteil als eine Kunststoffumspritzung am Rand der Deckelinnenseite gebildet ist, mit welcher die federnden Verbindungsarme fest verbunden sind. Hierdurch ist eine unmittelbare formschlüssige Anbindung der selbst als federnden Verbindungsarme ausgebildeten Verbindungsarme an den Deckelteilen bzw. dem Deckel-Verstärkungsteil vorgesehen, wodurch gewährleistet ist, daß die Wasserrinne durch das Eigenfederungsvermögen der Verbindungsarme in der Deckelschließstellung stets dichtend gegen die Unterseite des Deckels und des festen Fahrzeugdachteils bzw. bei ausgestelltem Schiebedachteil dichtend allein gegen die Unterseite des festen Fahrzeugdachteils angedrückt ist. Für diesen Zweck eignet sich besonders eine Ausbildung der Verbindungsarme in Art einer Blattfeder, die aus Stahlblech, Kunststoff oder einem anderen geeigneten Material gebildet ist. Alternativ können die Verbindungsarme auch aus einem Verbundwerkstoff hergestellt sein, wie beispielsweise Kunststoff mit einer Blecheinlage oder einer Federdraht-Einlage.

Durch die formschlüssige Ankopplung der federnden Verbindungsarme an die seitlichen Deckelteile bzw. das Deckel-Verstärkungsteil ergibt sich die vorteilhafte Besonderheit einer einfachen Montage am Deckel. Da das Deckel-Verstärkungsteil als Kunststoffumspritzung bzw. Spritzteil am Rand der Deckelinnenseite gebildet ist, besteht eine herstellungstechnisch besonders vorteilhafte, weil zusätzliche Montageschritte einsparende Anbringung der Verbindungsarme am Deckel im Einbinden der Verbindungsarme in die Kunststoffumspritzung, d.h. im Einspritzen dieser Arme während des Umspritzungsprozesses, wozu die Arme lediglich positionsgenau an der Innenseite des Deckels angelegt werden müssen. In diesem Fall erübrigen sich zusätzliche Befestigungsteile, wie etwa Bolzen zur Anbringung der Verbindungsarme am Deckel, und zusätzliche Federn sowie der damit verbundene Montagemehraufwand.

Vorteilhafterweise ist ferner die Wasserrinne einstückig mit an ihren Oberkanten vorgesehenen Dichtelementen aus Elastomer-Material gebildet und zugunsten einfacher Herstellbarkeit an die federnden Verbindungsarme angeformt.

In einer besonders vorteilhaften Ausführungsform werden die Wasserrinne, die Verbindungsarme und die Kunststoffumspritzung als Deckelverstärkung in einem Arbeitsgang am Deckel angeformt.

Nachfolgend wird die Erfindung anhand der Zeichnung beispielhaft näher erläutert; es zeigen:
- Fig. 1: schematisch das Schiebedach mit sich in Schließstellung befindlichem Deckel im Längsschnitt,
- Fig. 2: das Schiebedach bei ausgestelltem Deckel im Längsschnitt,
- Fig. 3: das Schiebedach mit abgesenktem Deckel im Längsschnitt,
- Fig. 4: eine vergrößerte Darstellung einer Wasserrinne im Querschnitt und
- Fig. 5: eine Variante zur Fig. 4.

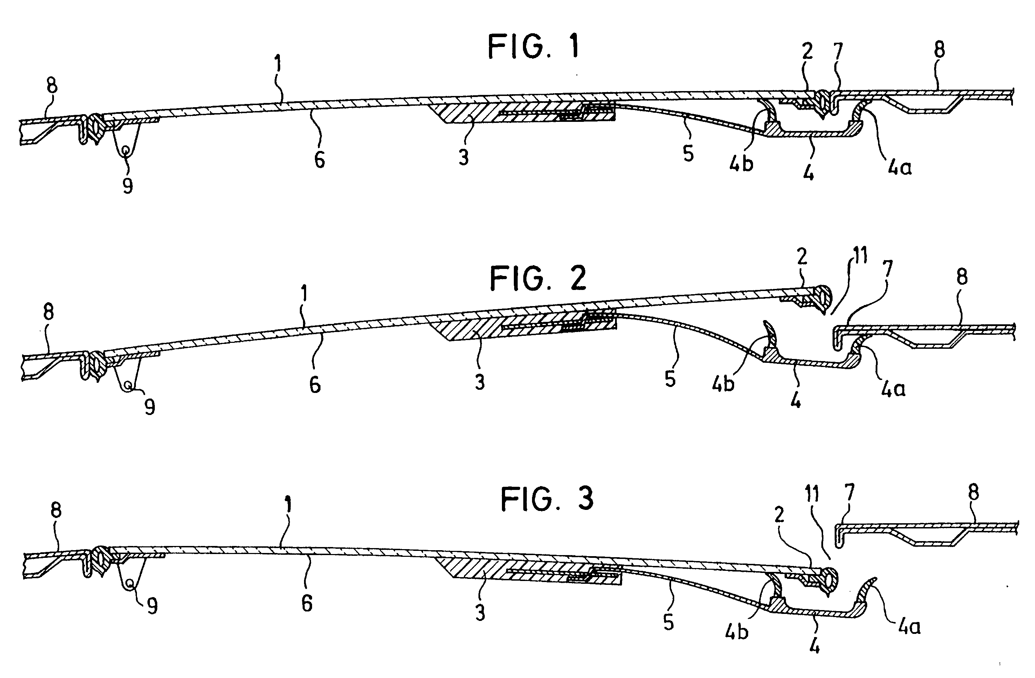

Wie in Fig. 1 bis 3 gezeigt, ist an der Unterseite eines Schiebedach-Deckels 1 mit Abstand von der Deckelhinterkante 2 ein Deckel-Verstärkungsteil 3 angebracht. Bevorzugt handelt es sich bei dem Deckel-Verstärkungsteil 3 um ein Kunststoffteil, das an die Deckelinnenseite angespritzt oder als Umschäumung des Deckelinnenblechs ausgebildet ist.

Eine Wasserrinne 4 ist über zwei seitlich beabstandete Verbindungsarme 5, von denen in Fig. 1 bis 3 lediglich ein einziger Verbindungsarm 5 gezeigt ist, mit dem Deckel 1 fest verbunden. Die beiden Verbindungsarme 5 sind seitlich im hinteren Bereich des Deckels 1 angeordnet und werden formschlüssig vom Deckel-Verstärkungsteil 3 gehalten bzw. von einer Kunststoff-Umspritzung oder Umschäumung mit eingebettet.

Im Falle der Ausbildung des Deckel-Verstärkungsteils 3 als Kunststoffspritzteil sind die beiden Verbindungsarme 5 in die Kunststoffumspritzung eingebettet, woraus ein besonders einfacher Montageprozeß für die Wasserrinne 4 und ihre Verbindungsarme 5 am Deckel 1 resultiert.

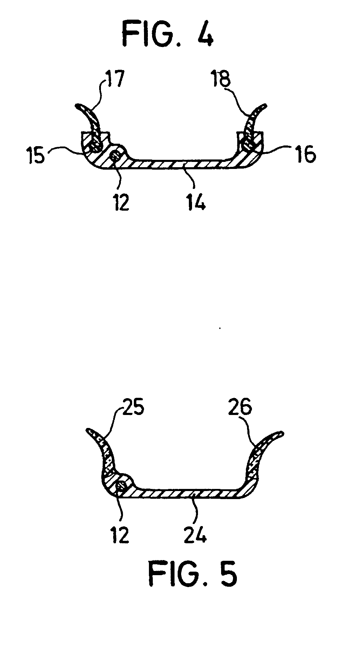

Die Wasserrinne 4 hat bevorzugt einen U-förmigen Querschnitt, und die beiden Verbindungsarme 5 sind so lang ausgebildet, daß die Wasserrinne 4 im Bereich zwischen der Hinterkante 2 des Deckels 1 und einer gegenüberliegenden Kante 7 eines festen Fahrzeugdachteils 8 zu liegen kommt. Bei geschlossenem Schiebedach-Deckel 1 (Fig. 1) werden die mit Dichtungen 17 und 18 versehenen (Fig. 4) oder als Dichtlippen 25 und 26 ausgebildeten oberen freien Ränder (Fig. 5) der Schenkel der im Querschnitt U-förmigen Wasserrinne unter Federvorspannung gegen die Unterseiten des Deckels 1 und des festen Fahrzeugdachteils 8 jeweils im Bereich von deren Kanten 2 bzw. 7 gepreßt. Diese Federvorspannung wird von den Verbindungsarmen 5 erzeugt, die federnd ausgebildet und unter entsprechender Vorspannung am bzw. im Verstärkungsteil 3 angebracht sind, wobei die Verbindungsarme 5 in diesem Zustand im wesentlichen parallel zum Deckel 1 verlaufen. Bevorzugt sind die Verbindungsarme 5 als Blattfedern gebildet, oder als durch Blattfedern verstärkte Kunststoffteile, die beispielsweise einstückig mit der ebenfalls aus Kunststoffmaterial bestehenden Wasserrinne 4 gebildet sind. Um eine sichere Anlage der Dichtung an der vorderen Kante (Schenkel 4b) am Deckel 1 über die gesamte Breite der Dachöffnung zu gewährleisten, ist die Wasserrinne 4 selbst vorzugsweise mit einer federnden Vorwölbung nach oben ausgebildet.

In Fig. 2 ist die ausgestellte Stellung des Schiebedach-Deckels 1 gezeigt, in welcher dieser um eine Drehachse 9 in Aufwärtsrichtung geschwenkt ist. In dieser Stellung stützt sich die Wasserrinne 4 ausschließlich mit ihrem hinteren Schenkel 4a hinter der Kante 7 an der Unterseite des festen Fahrzeugdachteils 8 ab. Der vordere Schenkel 4b der Wasserrinne 4 ist durch das Anheben des Deckels 1 von diesem abgerückt und die Verbindungsarme 5 sind aus ihrer parallelen Ausrichtung zum Deckel 1 ausgelenkt, pressen dadurch die Wasserrinne zum einen mit verstärkter Kraft gegen das feste Fahrzeugdachteil 8 und ermöglichen außerdem eine vorteilhafte Kippstellung der Wasserrinne 4, durch die deren vorderer Schenkel 4b als erhöhte Schwallwand zum Abfangen von Wasser dient, das insbesondere beim Bremsen über den hinteren Teil des festen Fahrzeugdachs nach vorne schießt und andersfalls durch die Dachöffnung 11 zum Innenraum vordringen könnte. Um die Kippstellung zu ermöglichen, sind die Verbindungsarme 5 bevorzugt nahe der Vorderkante der Wasserrinne 4 an dieser befestigt.

In Fig. 3 ist eine abgesenkte Stellung des Schiebedach-Deckels 1 gezeigt, in welcher die Wasserrinne 4 ausschließlich mit ihrem innenliegenden Schenkel 4b durch die federnden Verbindungsarme 5 gegen die Innenseite des Deckels 1 gedrückt ist; d.h. der außenliegende Schenkel 4a der Wasserrinne 4 liegt mit Abstand unter der Kante 7 des fahrzeugfesten Dachteils 8, wodurch der Deckel 1 ungehindert nach hinten unter das feste Fahrzeugdachteil verschiebbar ist.

Gemäß einer besonders bevorzugten Ausführungsform werden die Wasserrinne 4 , 14 bzw. 24, die Verbindungsarme 5 und ein Deckel-Verstärkungsteil 3 als Deckelinnenblech mit einer Kunststoffumspritzung in einem einzigen Arbeitsgang am Deckel 1 angeformt. Dies kann zum einen durch Einlegen separater Verbindungsarme 5 und vorgeformter Wasserrinnen in eine Spritzform erfolgen oder zum anderen durch Ausbildung aller Teile in einer einzigen Spritzform.

Wie aus Fig. 4 und 5 ersichtlich, kann dabei ein die Verbindungsarme 5 bildender Federdraht 12 gleichzeitig als quer über die gesamte Länge der Wasserrinne 14 bzw. 24 verlaufende Verstärkung der in diesem Fall als Kunststoffspritzteil ausgebildeten Wasserrinne dienen.

Bei Ausbildung als Kunststoffspritzteil sind an einer Wasserrinne 14 entweder Dichtungsaufnahmen 15 bzw. 16 im Bereich der senkrechten Schenkel vorgesehen, in die entsprechend geformte Dichtungen 17 bzw. 18 eingesteckt werden (Fig. 4) oder die vertikalen Schenkel einer Wasserrinne 24 sind an ihren oberen Enden unmittelbar als Dichtlippen 25 und 26 aus einem weicheren Elastomer mit angeformt.

### Bezugszeichenliste

- 1.: Deckel
- 2.: Deckelhinterkante
- 3.: Deckel-Verstärkungsteil
- 4.: Wasserrinne
- 4a.: hinterer Schenkel (von 4)
- 4b.: vorderer Schenkel (von 4)
- 5.: Verbindungsarme
- 6.: Deckelunterseite
- 7.: Kante des festen Fahrzeugdachteils
- 8.: Festes Fahrzeugdachteil
- 9.: Drehachse
- 11.: Dachöffnung
- 12.: Federdraht
- 14.: Wasserrinne (Fig. 4)
- 15.: Dichtungsaufnahme
- 16.: Dichtungsaufnahme
- 17.: Dichtung
- 18.: Dichtung
- 24.: Wasserrinne (Fig. 5)
- 25.: Dichtlippe
- 26.: Dichtlippe

## Patentansprüche

1. Schiebedach, insbesondere Schiebehebedach, für Fahrzeuge mit einem Deckel (1), der eine in einem festen Teil (8) des Fahrzeugdachs ausgebildete Dachöffnung (11) wahlweise verschließt oder wenigstens teilweise freigibt, und mit einer bewegbaren Wasserrinne (4, 14 bzw. 24), die in der Deckelschließstellung unterhalb der Hinterkanten von Deckel (1) und Dachöffnung (11) zu liegen kommt, über wenigstens einen Verbindungsarm (5) mit Teilen des Deckels (1) oder einem in Abstand von der Deckelhinterkante (2) liegenden Deckel-Verstärkungsteil (3) verbunden und in der Deckelschließstellung durch entsprechende Vorspannung der Verbindungsarme (5) gegen die Unterseite des Deckels (1) und des hinteren festen Fahrzeugdachteils (8) angedrückt ist, wobei die Verbindungsarme (5) als federnde Verbindungsarme ausgebildet und formschlüssig am Deckel (1) bzw. an dem Deckel-Verstärkungsteil (3) gehalten sind, **dadurch gekennzeichnet, daß** das Deckel-Verstärkungsteil (3) als eine Kunststoffumspritzung am Rand der Deckelinnenseite ausgebildet ist, mit welcher die federnden Verbindungsarme (5) fest verbunden sind.

2. Schiebedach nach Anspruch 1, **dadurch gekennzeichnet, daß** die Verbindungsarme (5) als Blattfedern ausgebildet sind.

3. Schiebedach nach Anspruch 1 oder 2, **dadurch gekennzeichnet, daß** die Verbindungsarme (5) aus federndem Stahlblech bestehen.

4. Schiebedach nach Anspruch 1 oder 2, **dadurch gekennzeichnet, daß** die Verbindungsarme (5) aus federndem Kunststoff bestehen.

5. Schiebedach nach einem der Ansprüche 1 bis 4, **dadurch gekennzeichnet, daß** die federnden Verbindungsarme (5) in die Kunststoffümspitzung eingebettet sind.

6. Schiebedach nach einem der Ansprüche 1 bis 5, **dadurch gekennzeichnet, daß** die Wasserrinne (4) und an deren Oberkante vorgesehene Dichtelemente einstöckig aus Elastomermaterial gebildet sind.

7. Schiebedach nach Anspruch 6, **dadurch gekennzeichnet, daß** die Wasserrinne (4) an die federnden Verbindungsarme (5) angeformt ist.

8. Schiebedach nach einem der vorhergehenden Ansprüche, **dadurch gekennzeichnet, daß** die Wasserrinne (4, 14 bzw. 24) und die federnden Verbindungsarme (5) gemeinsam mit einem als Kunststoffumspritzung ausgebildeten Deckel-Verstärkungsteil (3) am Deckel (1) angeformt werden.

## Claims

1. A sliding roof, particularly a sliding-tilting roof, for vehicles with a cover (1) which optionally occludes or at least partially exposes a roof aperture (11) constructed in a fixed part (8) of the vehicle roof, and with a movable water gutter (4, 14 and/or 24), which in the cover closed position, comes to rest under the rear edges of the cover (1) and roof opening (11), while at least one connecting arm (5) connected to parts of the cover (1) or a cover reinforcing part (3) situated at a distance from the rear edge (2) of the cover and, in the cover closed position, is pressed by an appropriate initial tension in the connecting arms (5) against the under side of the cover (1) and of the rear fixed part (8) of the vehicle roof, the connecting arms (5) being constructed as resilient connecting arms and being held positively on the cover (1) or on the cover reinforcing part (3), **characterised in that** the cover reinforcing part (3) is constructed as a synthetic plastic part injected around the edge of the inside of the cover and to which the resilient connecting arms (5) are rigidly connected.

2. A sliding roof according to claim 1, **characterised in that** the connecting arms (5) are constructed as leaf springs.

3. A sliding roof according to claim 1 or 2, **characterised in that** the connecting arms (5) consist of resilient steel sheet.

4. A sliding roof according to claim 1 or 2, **characterised in that** the connecting arms (5) consist of resilient synthetic plastics material.

5. A sliding roof according to one of claims 1 to 4, **characterised in that** the resilient connecting arms (5) are embedded in the synthetic plastics injection moulding part.

6. Sliding roof according to one of claims 1 to 5, **characterised in that** the gutter (4) and sealing elements provided on its upper edge are integrally formed from elastomeric material.

7. A sliding roof according to claim 6, **characterised in that** the gutter (4) is integrally formed on the resilient connecting arms (5).

8. A sliding roof according to one of the preceding claims, **characterised in that** the gutter (4,14 and/or 24) together with the resilient connecting arms (5) are integrally formed with the reinforcing part which is constructed as a plastic moulding cover reinforcing part (3) on the cover (1).

## Revendications

1. Toit coulissant, notamment toit à mouvement vertical et coulissant, pour des véhicules dotés d'un panneau (1) qui, sélectivement, ferme ou dégage au moins partiellement une ouverture de toit (11) configurée dans une partie fixe (8) du toit du véhicule, et dotés d'une gouttière déplaçable (4, 14 ou 24) qui vient se placer en dessous des arêtes arrière du panneau (1) et de l'ouverture de toit (11) dans la position fermée du panneau, qui est reliée par l'intermédiaire d'au moins un bras de liaison (5) à des parties du panneau (1) ou à un élément de renforcement de panneau (3) situé à distance de l'arête arrière (2) du panneau et qui, dans la position fermée du panneau, est pressée contre le dessous du panneau (1) et de la partie arrière fixe (8) du toit du véhicule par une précontrainte correspondante des bras de liaison (5), les bras de liaison (5) étant réalisés sous forme de bras de liaison élastiques et étant maintenus en engagement positif sur le panneau (1) ou respectivement sur l'élément de renforcement de panneau (3), **caractérisé en ce que** l'élément de renforcement de panneau (3) est réalisé sous la forme d'un enrobage par injection de matière plastique sur le bord du côté intérieur du panneau, par lequel les bras de liaison élastiques (5) sont fixement assemblés.

2. Toit coulissant selon la revendication 1, **caractérisé en ce que** les bras de liaison (5) sont réalisés sous forme de ressorts à lame.

3. Toit coulissant selon la revendication 1 ou 2, **caractérisé en ce que** les bras de liaison (5) sont réalisés en tôle d'acier à ressorts.

4. Toit coulissant selon la revendication 1 ou 2, **caractérisé en ce que** les bras de liaison (5) sont réalisés en matière plastique élastique.

5. Toit coulissant selon l'une quelconque des revendications 1 à 4, **caractérisé en ce que** les bras de liaison élastiques (5) sont incorporés dans l'enrobage par injection de matière plastique.

6. Toit coulissant selon l'une quelconque des revendications 1 à 5, **caractérisé en ce que** la gouttière (4) et des éléments d'étanchéité prévus sur son arète supérieure sont réalisés d'un seul tenant en matériau élastomère.

7. Toit coulissant selon la revendication 6, **caractérisé en ce que** la gouttière (4) est formée sur les bras de liaison élastiques (5).

8. Toit coulissant selon l'une quelconque des revendications précédentes, **caractérisé en ce que** la gouttière (4, 14 ou 24) et les bras de liaison élastiques (5) sont formés sur le panneau (1) conjointement avec un élément de renforcement de panneau (3) réalisé sous forme d'enrobage par injection de matière plastique.
